## Europäisches Patentamt
## European Patent Office
## Office européen des brevets

(19)

(11) Publication number: **0 055 880**
**B1**

# EUROPEAN PATENT SPECIFICATION

(12)

(45) Date of publication of patent specification: **03.04.85**

(51) Int. Cl.⁴: **B 21 D 28/36**

(21) Application number: **81201397.7**

(22) Date of filing: **24.12.81**

(54) **Punching and nibbling machine having die-carrying turrets with horizontal and parallel axes.**

(30) Priority: **07.01.81 IT 1903581**

(43) Date of publication of application:
**14.07.82 Bulletin 82/28**

(45) Publication of the grant of the patent:
**03.04.85 Bulletin 85/14**

(84) Designated Contracting States:
**AT BE CH DE FR GB LI LU NL SE**

(56) References cited:
**DE-A-2 648 447**
**FR-A- 492 842**
**FR-A- 507 999**
**GB-A- 920 443**
**US-A-4 144 736**

(73) Proprietor: **Pavone, Tommaso**
**Viale Ranzoni 14**
**I-20149 Milano (IT)**

(72) Inventor: **Pavone, Tommaso**
**Viale Ranzoni 14**
**I-20149 Milano (IT)**

(74) Representative: **Martegani, Franco et al**
**Ing. Barzanò & Zanardo S.p.A. Via Borgonuovo, 10**
**I-20121 Milano (IT)**

Courier Press, Leamington Spa, England.

## Description

Punching and nibbling machines are known, in which the moulds (punches and dies) are mounted on a couple of superimposed turrets which are driven to stepwise rotation about spaced parallel axes (FR—A—507 999).

The workpiece is driven between the two turrets by a so-called coordination system, which is equipped with plungers that follow a sample template.

The machines referred to above have, as a rule, a supporting frame in the shape of a "C", in the interior of which the die-carrying turrets are housed, whereas the coordination system is outside said frame and is arranged either laterally or frontally with respect to the machine structure.

So is done to reduce the dimensions of the frame, which is exposed to considerable bending stresses.

However, to arrange the coordination system either frontally or laterally of the die-carrying turrets is a source of not negligible troubles.

If the coordination system is mounted laterally, it is not possible, on account of the bulk of the system, to machine a continuous tape which must be repositioned every time relative to the die-carrying turrets.

Conversely, if the coordination system is mounted frontally, still for reasons of bulk, it is impossible to machine a workpiece having a double width by tipping it up. In addition, the visibility in the processing area is extremely reduced.

Lastly, both in the former and in the latter case, it is required that an additional structure is provided on the machine side, or on the machine front, which is capable of bearing the coordination system.

Another shortcoming which is common to the punching and nibbling machines having its turrets superimposed on parallel horizontal planes, is due to the bulk of the turrets on the working plane.

This bulk makes it difficult to round and to cut off corners on pieces having reduced sizes, that is whenever the edge of the workpiece must overtake the mold. At any rate, to machine small-size workpieces, it is necessary that the system of coordination be equipped with very slender pincers, which are thus weak, so as to enable them to enter between the die-carrying turrets.

Moreover, the visibility of the workpiece is still uneasy.

In order to remove these drawbacks, it has already been suggested to provide machines in which the coordination system is housed in the interior of a C-shaped framing, at the outside of which, conversely, the molds have been installed, which are no longer mounted on turrets, but are, instead, stored in a magazine and fed individually into the working area by means of a swinging arm.

In a machine of the latter kind, the coordination system is thus located at the rear of the mold, relative to the machine structure. Such an arrangement of parts is an advantage because it permits, longitudinally, to reposition as many times as desired (in the case of a tape) the workpiece, and, transversally, to machine a piece having a double width by tipping the workpiece up.

However, the machine of this latter class does not afford fully satisfactory performances insofar as the system for feeding the molds to the machining area is concerned.

An object of the present invention is thus to provide a punching and nibbling machine which does not exhibit the defects of the conventional machines, while retaining the appreciable qualities thereof.

Having this object in view, according to the invention, it has been envisaged to provide a punching and nibbling machine comprising a C-shaped first frame having two spaced supporting ends, a turret carried by each of said supporting ends, said turrets lying in a common plane and being mounted for rotation about spaced parallel axes, cooperating forming members carried by said turrets, actuator means adapted to actuate said forming members to a reciprocal cooperation, characterized in that said actuator means are mounted on a second frame independent of said first frame.

Preferably, such turrets are of an annular shape and their interior contains the linkages for actuating the molds.

By so doing, a machine is obtained which is extremely compact and in which the coordination system can be arranged past the molds, and thus it is contained in the interior of the C-shaped frame and can afford all the advantages which have been outlined above.

To have the turrets contained in the C-structure along a vertical plane, is a circumstance which also enables to design a twin-C system for separately sustaining the turret unit and the leakage unit, to ensure the satisfactory alignment of the punches with the dies.

Such a structure can be embodied in a self-contained arrangement, as will be explained hereinafter.

In addition, to have arranged the turrets on the same vertical plane is such that only a limited space of the machining plane is occupied, so that machining of small-size workpieces can be accomplished with a minimum swarf production and a very good visibility of the machining field.

The structural and functional features of the invention and its advantages over the prior art will become still clearer from a survey of the detailed ensuing description, aided by the accompanying drawings, wherein:

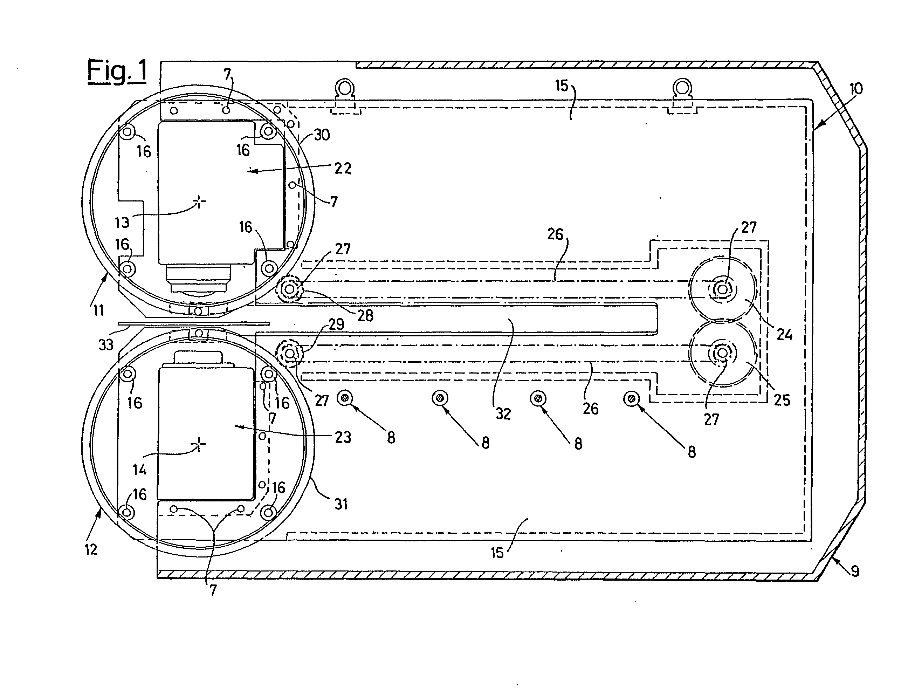

FIGURE 1 is a side elevational view of a machine constructed according to the principles of this invention,

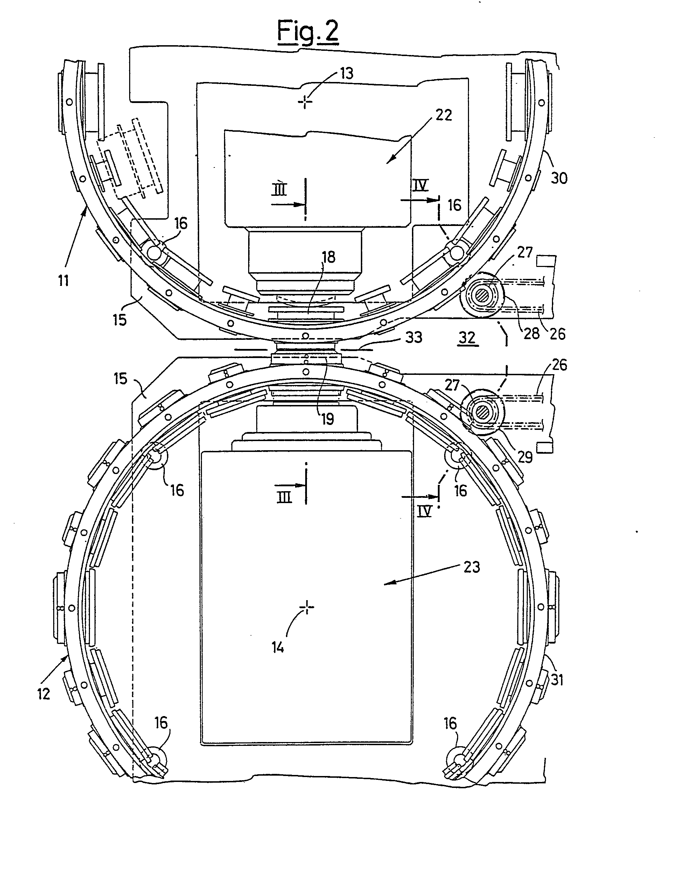

FIGURE 2 is a closing view of the mold-carrying turrets,

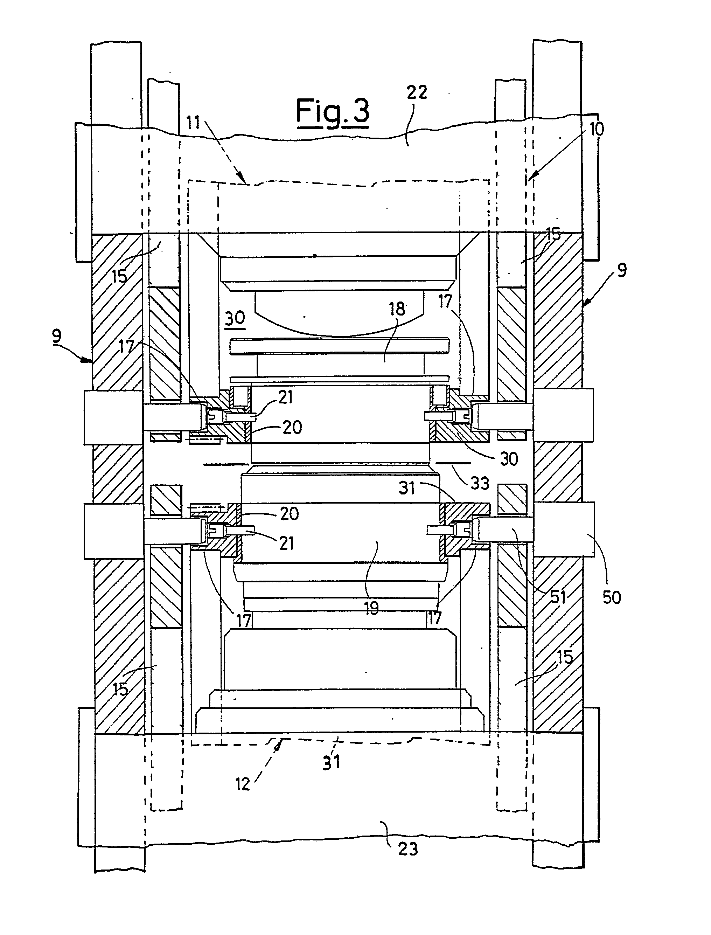

FIGURE 3 is a cross-sectional view, taken along the line III—III of FIGURE 2, and

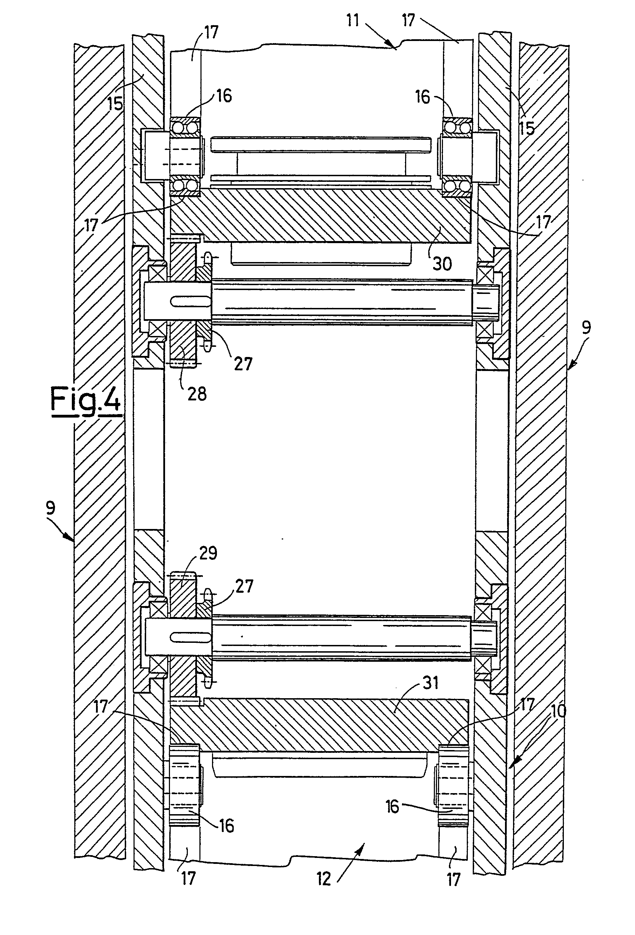

FIGURE 4 is a cross-sectional view taken along the line IV—IV of FIGURE 2.

Having now reference to the drawings, the machine in question is structurally composed of a framing 10, of the known C-shaped outline, on which a couple of mold-carrying turrets, 11, 12, is mounted.

Such C-frame can be mounted as inserted into an external C-structure, 9, connected to the frame 10 through specially provided bushings 8.

Frame 9 carries, frontally, the linkage units 22—23 which are secured thereto by screws 7.

According to the present invention, the turrets 11, 12, are arranged on the same vertical plane and can be rotated about their respective parallel axes, 13, 14.

The turrets, 11, 12, have an annular outline and are mounted between two confronting shoulders, 15, which make up the framing 10 aforementioned. Each turret is borne for rotation by a set of bearings, 16, which are extended from the shoulders 15 and engage respective edge races 17, the latter being formed through the turret structure. The upper turret, 11, carries the punches, 18, whereas the lower turret, 12, carries the dies, 19. Punches 18 and dies 19 are radially mounted in their respective turrets of annular shape, 11 and 12, and are housed within bores 20 and each of them is latched in position by a couple of diametrically opposed dowels, 21, whereas the turrets are positioned by dowels, 51, driven by actuators, 50, which are placed in correspondence with the horizontal axis of the mold.

According to still another feature of the embodiment, in the interior of the turrets, 11, 12, boxes such as 22, 23 are received, which contain the control linkages for driving the punches and the dies and that are secured also to the outer structure 9.

Such linkages, as well as the punches and the dies, are not shown in detail herein since they can be of any known make with which all those skilled in the art are familiar.

The simultaneous stepwise rotation of the turrets 11 and 12 is controlled by a prime mover unit (not shown) via a chain drive, gears and gear trains. More detailedly, the drive is transferred by two mutually meshing gears 24 and 25, via chains 26 and pinions 27, to two gears, 28 and 29 which are in mesh with the respective rings gears 30, 31, which are formed on the external peripheral surface of the turrets, 11, 12.

By such an arrangement of the turrets 11, 12 and the boxes 22, 23, it becomes possible to conveniently locate, in the zone 32 of the frame 10 and past the turrets themselves, a coordination system intended to shift the workpiece 33, said system having not been shown in detail herein for the sake of simplicity, inasmuch as it can be of any known make.

## Claims

1. A punching and nibbling machine comprising a C-shaped first frame (10) having two spaced supporting ends, a turret (11, 12) carried by each of said supporting ends, said turrets (11, 12) lying in a common plane and being mounted for rotation about spaced parallel axes (13, 14), cooperating forming members (18, 19) carried by said turrets (11, 12), actuator means (22, 23) adapted to actuate said forming members (18, 19) to a reciprocal cooperation, characterized in that said actuator means (22, 23) are mounted on a second frame (9) independent of said first frame (10).

2. A machine according to claim 1, wherein said actuator means (22, 23) are mounted in opposed relation within said turrets for actuation of said forming members (18, 19).

3. A machine according to claims 1, 2, wherein said second frame (9) seats said first C-shaped frame (10).

4. A machine according to claims 1, 2, 3, wherein said second frame (9) is also C-shaped.

5. A machine according to claim 4, wherein said second frame (9) has spaced ends which carry said actuator means (22, 23).

6. A machine according to claims 1, 2, 3, 4, 5, wherein said second frame (9) carries centering means (50, 51) which cooperate with matching means carried by said turrets (11, 12), in order to center a forming member of one turret with a complementary forming member of the other turret.

7. A machine according to claim 6, wherein said centering means (50, 51) comprise actuated dowels (51) and said matching means are formed of bores, each of which is adapted to receive a respective one of said dowels (51).

8. A machine according to claim 7, wherein said actuated dowels (51) act along an axis which is perpendicular to the actuation axis of said forming members (18, 19).

## Patentansprüche

1. Vorrichtung zum Stanzen und Knabbern, mit einem C-förmigen ersten Rahmen (10) mit zwei im Abstand angeordneten Endteilen, je einem Kopf, der an den jeweiligen Endteilen gehaltert ist, wobei die Köpfe (11, 12) in einer gemeinsamen Ebene liegen und zur Drehung um im Abstand angeordnete parallele Achsen (13, 14) befestigt sind, mit zusammenarbeitenden Formierteilen (18, 19), die an den Köpfen (11, 12) getragen sind, mit Antrieben (22, 23), um die Formierteile (18, 19) in gegenseitigem Zusammenwirken zu betätigen, dadurch gekennzeichnet, daß die Antriebe (22, 23) an einem zweiten vom ersten (10) unabhängigen Rahmen (9) befestigt sind.

2. Vorrichtung nach Anspruch 1, dadurch gekennzeichnet, daß die Antriebe (22, 23) in Gegenüberlage innerhalb der Köpfe zur Betätigung der Formierteile (18, 19) befestigt sind.

3. Vorrichtung nach Anspruch 1 oder 2, dadurch gekennzeichnet, daß der zweite Rahmen (9) einen Sitz bildet für den ersten C-förmigen Rahmen (10).

4. Vorrichtung nach einem der Ansprüche 1 bis 3, dadurch gekennzeichnet, daß der zweite Rahmen (9) ebenfalls C-förmig ausgebildet ist.

5. Vorrichtung nach Anspruch 4, dadurch gekennzeichnet, daß der zweite Rahmen (9) im Abstand angeordnete Endteile aufweist, welche die Antriebe (22, 23) tragen.

6. Vorrichtung nach einem der Ansprüche 1 bis 5, dadurch gekennzeichnet, daß der zweite Rahmen (9) Zentriereinrichtungen (50, 51) aufweist, welche mit Paßeinrichtungen zusammenarbeiten, die durch die Köpfe (11, 12) getragen sind, um einen Formierteil des einen Kopfes mit einem komplementären Formierteil des anderen Kopfes zu zentrieren.

7. Vorrichtung nach Anspruch 6, dadurch gekennzeichnet, daß die Zentriereinrichtungen (50, 51) betätigbar Dübel oder Stifte (51) aufweisen und daß die Paßeinrichtungen aus Bohrungen gebildet sind, die die entsprechenden Dübel (51) aufnehmen können.

8. Vorrichtung nach Anspruch 7, dadurch gekennzeichnet, daß die Dübel (51) längs einer Achse wirksam sind, die senkrecht zur Tätigkeitsachse der Formierteile (18, 19) ist.

**Revendications**

1. Machine à découper et à poinçonner comportant un premier bâti (10) en forme de C comprenant deux extrémités supports espacées, une tourelle (11, 12) portée par chacune de ces extrémités supports, ces tourelles (11, 12) étant situées dans un plan commun et étant montées rotatives autour d'axes parallèles espacés (13, 14), des éléments de formage (18, 19) coopérant entre eux et portés par ces tourelles (11, 12), des moyens de manoeuvre (22, 23) aptes à actionner ces éléments de formage (18, 19) pour une coopération réciproque, caractérisée en ce que ces moyens de manoeuvre (22, 23) sont montés sur un second bâti (9) indépendant du premier bâti (10).

2. Machine selon la revendication 1, caractérisée en ce que les moyens de manoeuvre (22, 23) sont montés en relation opposée à l'intérieur des tourelles pour l'actionnement des éléments de formage (18, 19).

3. Machine selon l'une des revendications 1 ou 2, caractérisée en ce que le second bâti (9) repose sur le premier bâti enforme de C (10).

4. Machine selon l'une quelconque des revendications 1, 2 ou 3, caractérisée en ce que le second bâti (9) est aussi en forme de C.

5. Machine selon la revendication 4, caractérisée en ce que le second bâti (9) comporte des extrémités espacées qui portent les moyens de manoeuvre (22, 23).

6. Machine selon l'une quelconque des revendications 1 à 5, caractérisée en ce que le second bâti (9) porte des moyens de centrage (50, 51) qui coopèrent avec des moyens complémentaires portés par les tourelles (11, 12), afin de réaliser le centrage d'un élément de formage d'une tourelle avec un élément de formage complémentaire de l'autre tourelle.

7. Machine selon la revendication 6, caractérisée en ce que les moyens de centrage (50, 51) comprennent des goujons commandés (51) et en ce que les moyens complémentaires sont formés par des trous, dont chacun est apte à recevoir un goujon (51) associé.

8. Machine selon la revendication 7, caractérisée en ce que les goujons commandés (51) se déplacent le long d'un axe qui est perpendiculaire à l'axe d'actionnement des éléments de formage (18, 19).

Fig.1

0 055 880

## Fig.2

Fig. 3

Fig.4